Europäisches Patentamt

European Patent Office

Office européen des brevets

(19)

(11) EP 1 548 074 A1

(12) EUROPEAN PATENT APPLICATION
published in accordance with Art. 158(3) EPC

(43) Date of publication:
29.06.2005 Bulletin 2005/26

(51) Int Cl.⁷: **C09D 135/00**, C09D 129/04,
C09D 123/02, B32B 27/28

(21) Application number: 03798521.5

(22) Date of filing: 26.09.2003

(86) International application number:
PCT/JP2003/012339

(87) International publication number:
WO 2004/029168 (08.04.2004 Gazette 2004/15)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 27.09.2002 JP 2002282284

(71) Applicant: TOYO INK MFG. CO., LTD.
Chuo-ku Tokyo 1040-0031 (JP)

(72) Inventors:
• KAMOSHITA, Miyuki, c/o Toyo Ink Mfg. Co., Ltd.
Tokyo 104-0031 (JP)
• YOSHIDA, Mitsuo, c/o Toyo Ink Mfg. Co., Ltd.
Tokyo 104-0031 (JP)

(74) Representative: Koepe, Gerd L., Dipl.-Chem. et al
Koepe & Partner,
Robert-Koch-Strasse 1
80538 München (DE)

(54) **GAS BARRIER COATING MATERIAL AND GAS BARRIER LAMINATES MADE BY USING THE SAME**

(57) There is disclosed a gas barrier coating material comprising polyvinyl alcohol (A), an ethylene-maleic acid copolymer (B), and a metal compound (D), wherein a ratio (A)/(B) between the polyvinyl alcohol (A) and the ethylene-maleic acid copolymer (B) falls within a range from (A)/(B) = 50/50 to 10/90 (weight ratio), the metal compound (D) comprises at least one compound selected from a group consisting of hydroxides, oxides, halides, carbonates, sulfates, nitrates, sulfites, and acetates of bivalent or higher metals selected from a group consisting of Mg, Ca, Al, Fe, Co, Ni, and Cu, and a quantity of the metal compound (D), expressed as an equivalent value relative to carboxyl groups within the ethylene-maleic acid copolymer (B), is within a range from 0.05 to 30%. Furthermore, there is disclosed a gas barrier laminate, comprising a plastic substrate, and a gas barrier layer formed from this gas barrier coating material, wherein the gas barrier layer is laminated on top of the plastic substrate, either directly, or with an undercoat layer disposed therebetween.

# FIG.1

## EP 1 548 074 A1

**Description**

TECHNICAL FIELD

The present invention relates to a gas barrier coating material capable of forming a gas barrier laminate that displays excellent gas barrier properties, even under conditions of high humidity.

BACKGROUND ART

Thermoplastic resin films such as polyamide films and polyester films have excellent strength, transparency and moldability, and are consequently widely used as packaging materials. However, because these thermoplastic resin films also display reasonably high levels of permeability to gases such as oxygen, if this type of thermoplastic resin film is used for packaging general foodstuffs, retort foods, cosmetics, pharmaceuticals, or agricultural chemicals or the like, then during long-term storage, gases such as oxygen can permeate through the film, causing deterioration of the package contents.

As a result, laminated films produced by coating the surface of a thermoplastic resin with an emulsion or the like of polyvinylidene chloride (hereafter abbreviated as PVDC), thereby forming a PVDC layer with good gas barrier properties, are widely used for applications such as food packaging. However, PVDC generates organic substances such as acidic gases on incineration, and with recent advances in environmental awareness, there is considerable demand for replacing PVDC with other materials.

One example of an alternative material to PVDC is polyvinyl alcohol (hereafter abbreviated as PVA). PVA does not generate toxic gas on incineration, and displays excellent gas barrier properties under low humidity conditions. However, as the humidity increases, the gas barrier property declines rapidly, so that in most cases, PVA films cannot be used for wrapping foods that contain water.

One example of a polymer known to improve the type of deterioration in gas barrier properties seen for PVA under high humidity conditions is a copolymer of vinyl alcohol and ethylene (hereafter abbreviated as EVOH). However, in order to ensure that the gas barrier property is maintained at a practical level in a high humidity atmosphere, the proportion of ethylene within the copolymer must be increased beyond a certain level, but unfortunately, the resulting polymer tends to be difficult to dissolve in water. Accordingly, in order to produce a coating agent comprising EVOH with a high ethylene ratio within the copolymer, either an organic solvent, or a mixed solvent of water and an organic solvent must be used. However, not only is the use of an organic solvent undesirable from an environmental viewpoint, it also results in increased costs due to the necessity of providing a process for recovering the organic solvent.

Many techniques have been investigated with the aim of developing a liquid composition comprising a water-soluble polymer, which can be coated onto a film to form a coating that displays a favorable gas barrier property even under conditions of high humidity. Reference 1 (Japanese Laid-Open Publication No. Hei 06-220221), reference 2 (Japanese Laid-Open Publication No. Hei 07-102083), reference 3 (Japanese Laid-Open Publication No. Hei 07-205379), reference 4 (Japanese Laid-Open Publication No. Hei 07-266441), reference 5 (Japanese Laid-Open Publication No. Hei 08-041218), reference 6 (Japanese Laid-Open Publication No. Hei 10-237180), and reference 7 (Japanese Laid-Open Publication No. 2000-000931) all disclose techniques using mixtures of PVA and either polyacrylic acid or polymethacrylic acid.

However, in the inventions proposed in the above references 1 through 7, either heat treatment at high temperature, or heat treatment over an extended period is required to produced the desired favorable gas barrier property, meaning a large amount of energy is required during production, which places a significant burden on the environment. Furthermore, if a high temperature heat treatment is employed, then not only is there an increased danger of color changes or decomposition of the PVA and the like which constitute the barrier layer, but wrinkling can occur in the plastic film substrate or the like onto which the barrier layer is laminated, and deformation such as curling or shrinkage can also occur, meaning the product is unsuitable as a packaging material. In order to prevent deterioration of the plastic substrate, a special heat resistant film that is capable of withstanding the high temperature heat treatment must be used as the substrate, but this creates problems of practicality and economic viability. On the other hand, if the temperature of the heat treatment is lowered, then treatment must be conducted over extremely long periods, causing an undesirable fall in productivity.

Furthermore, investigations have also been conducted into resolving the above problems associated with PVA film by introducing cross-linking structures into the PVA. However, although the humidity dependence of the oxygen gas barrier property of PVA film typically decreases with increasing cross-linking density, the inherent oxygen gas barrier property of the PVA film under dry conditions tends to deteriorate, meaning it is extremely difficult to achieve a favorable oxygen gas barrier property under high humidity conditions.

Cross-linking of polymer molecules generally improves the water resistance of the polymer, but the gas barrier property describes the ability of the material to prevent the penetration or diffusion of comparatively small molecules such as oxygen, and a favorable gas barrier property can not always be achieved simply by increasing cross-linking within the polymer. For example, three dimensional cross-linked polymers such as epoxy resins and phenol resins do not display gas barrier properties.

In addition, inventions have also been proposed for producing gas barrier laminates using PVA and a maleic acid-based copolymer, which allow heat treatment to be conducted at a lower temperature, or for a shorter period, than conventional processes (reference 8: Japanese Laid-Open Publication No. 2001-323204, reference 9: Japanese Laid-Open Publication No. 2002-020677, and reference 10: Japanese Laid-Open Publication No. 2002-241671).

The inventions disclosed in these references 8 through 10 enable the production of gas barrier laminates under milder conditions than the inventions disclosed in the references 1 through 7. However, further improvements are needed in the level of the gas barrier property achieved.

DISCLOSURE OF INVENTION

A first aspect of the present invention provides a gas barrier coating material comprising polyvinyl alcohol (A), an ethylene-maleic acid copolymer (B), and a metal compound (D), wherein the ratio (A)/(B) between the polyvinyl alcohol (A) and the ethylene-maleic acid copolymer (B) falls within a range from (A)/(B) = 50/50 to 10/90 (weight ratio), the metal compound (D) comprises at least one compound selected from a group consisting of hydroxides, oxides, halides, carbonates, sulfates, nitrates, sulfites, and acetates of bivalent or higher metals selected from a group consisting of Mg, Ca, Al, Fe, Co, Ni, and Cu, and the quantity of the metal compound (D), expressed as an equivalent value relative to the carboxyl groups within the ethylene-maleic acid copolymer (B), is within a range from 0.05 to 30%.

A second aspect of the present invention provides a gas barrier laminate comprising a plastic substrate and a gas barrier layer formed from the gas barrier coating material described above, wherein the gas barrier layer is laminated on top of the plastic substrate, either directly, or with an undercoat layer disposed therebetween.

BRIEF DESCRIPTION OF THE DRAWINGS

Fig. 1 is a cross-sectional view showing a schematic representation of an embodiment of a gas barrier laminate.
Fig. 2 is a cross-sectional view showing a schematic representation of another embodiment of a gas barrier laminate.

BEST MODE FOR CARRYING OUT THE INVENTION

A gas barrier coating material (C) according to the present invention (hereafter also referred to as "the coating material (C)") comprises PVA (A) and an ethylene-maleic acid copolymer (hereafter abbreviated as EMA) (B) in a ratio (A)/(B) = 50/50 to 10/90 (weight ratio), and also comprises a specific bivalent or higher metal compound. This coating material (C) can be used as a coating material for forming a gas barrier layer, and can be applied to a plastic substrate or the like described below to impart gas barrier properties to that substrate. As follows is a detailed description of each of the components of the coating material (C), and a method of producing the coating.

[PVA(A)]

PVA can be produced using known methods, by either complete or partial saponification of a vinyl ester polymer (or a copolymer of a vinyl ester and another vinyl compound, as described below).

Examples of suitable vinyl esters include vinyl formate, vinyl acetate, vinyl propionate, vinyl pivalate, and vinyl versatate, and of these, vinyl acetate is industrially the most preferred.

Another vinyl compound may be copolymerized with the vinyl ester, provided such copolymerization does not impair the effects of the present invention. Suitable examples of this other vinyl compound include unsaturated monocarboxylic acids such as crotonic acid, acrylic acid, and methacrylic acid, as well as the esters, salts, anhydrides, amides, and nitriles thereof; unsaturated dicarboxylic acids such as maleic acid, itaconic acid, and fumaric acid, as well as the salts thereof; ? -olefins of 2 to 30 carbon atoms; alkyl vinyl ethers; and vinylpyrrolidone. From a production viewpoint, the polymer contained within the gas barrier coating material is preferably water soluble, and consequently hydrophobic copolymer components are preferably introduced at levels that do not impair the water solubility of the PVA.

Known alkali saponification methods or acid saponification methods can be used for saponifying the vinyl ester (co)polymer, and of these, a method in which alcoholysis is conducted in methanol using an alkali hydroxide is preferred. Saponification degree values close to 100% are preferred in terms of producing a favorable gas barrier property, because if the saponification degree is too low, the barrier performance tends to deteriorate. The saponification degree is preferably at least approximately 95%, and even more preferably 98% or greater.

The average polymerization degree of the PVA is preferably within a range from 50 to 4,000, and even more preferably from 200 to 3,000.

[EMA (B)]

The ethylene-maleic acid copolymer (B) can be produced by polymerization using known methods, such as a solution radical polymerization of maleic acid and ethylene. Small quantities of other vinyl compounds can also be included in the copolymerization, provided such addition does not impair the effects of the present invention. Examples of suitable vinyl compounds include acrylate esters such as methyl acrylate, methyl methacrylate, ethyl acrylate, ethyl methacrylate, butyl acrylate, and butyl methacrylate; vinyl esters such as vinyl formate and vinyl acetate; styrene and p-styrenesulfonic acid; olefins of 3 to 30 carbon atoms such as propylene and isobutylene; as well as other compounds with reactive groups capable of reacting with the hydroxyl groups of PVA.

Maleic acid units preferably account for at least 10 mol% of the EMA (B), and an alternating copolymer of maleic acid units with a substantially equivalent molar quantity of ethylene and maleic anhydride is particularly preferred. If the quantity of maleic acid units is less than 10 mol%, then insufficient cross-linking structures are formed through reaction with the PVA units, which increases the danger of a deterioration in the gas barrier property. These maleic acid units tend to form maleic anhydride structures in dry conditions, through a cyclodehydration of the adjacent carboxyl groups, but then undergo ring opening to form maleic acid structures in humid conditions or in an aqueous solution.

The weight average molecular weight of the EMA (B) is preferably within a range from 3,000 to 1,000,000, and even more preferably from 5,000 to 900,000, and most preferably from 10,000 to 800,000.

The gas barrier coating material (the coating material for forming the gas barrier layer) (C) must display a weight ratio (A)/(B) between the PVA (A) and the EMA (B) that falls within a range from (A)/(B) = 50/50 to 10/90, and this ratio is preferably within a range from 50/50 to 15/85, and even more preferably from 55/45 to 20/80, and most preferably from 40/60 to 25/75. If the weight proportion of the EMA is less than 50% by weight, then the addition of the specific bivalent or higher metal compound (D) does not cause adequate formation of cross-linking structures within the gas barrier layer as described below. Furthermore, if the relative quantity of either the PVA (A) or the EMA (B) is overly high, then insufficient cross-linking structures are formed through the reaction of the PVA (A) and the EMA (B), causing a deterioration in the gas barrier property, particularly under high humidity conditions.

Both the PVA (A) and the EMA (B) may comprise two or more different materials, and in such cases, the respective combined weights of the different materials must satisfy the above weight ratio range.

[Metal Compound (D)]

In addition to the PVA (A) and the EMA (B), the coating material (C) must also comprise a specific bivalent or higher metal compound (D). By including this specific bivalent or higher metal compound (D), additional cross-linking structures can be formed within the gas barrier layer. The specific bivalent or higher metal compound (D) is preferably capable of reacting with hydroxyl groups or carboxyl groups, and compounds capable of reacting with EMA-derived carboxyl groups are particularly preferred. By undergoing reaction with hydroxyl groups or carboxyl groups, the metal compound (D) is able to form favorable cross-linking structures. These generated cross-linking structures may be coordination bonds, or the more obvious ionic or covalent bonds.

The metal of the metal compound (D) comprises at least one bivalent or higher metal selected from a group consisting of the 7 metals Mg, Ca, Al, Fe, Co, Ni, and Cu. At least one compound of this metal, selected from a group consisting of 8 different compound types, namely hydroxides, oxides, halides, carbonates, sulfates, nitrates, sulfites, and acetates, constitutes the component referred to as the metal compound (D). In other words, potential metal compounds (D) include 8 different compound types for each metal. For example, the potential Mg compounds are Mg hydroxide (d1), Mg oxide (d2), Mg halides (d3), Mg carbonate (d4), Mg sulfate (d5), Mg nitrate (d6), Mg sulfite (d7), and Mg acetate (d8). Similarly, there are 8 Ca compounds from the hydroxide (d9) through to the acetate (d16), 8 Al compounds from the hydroxide (d17) through to the acetate (d24), 8 Fe compounds from the hydroxide (d25) through to the acetate (d32), 8 Co compounds from the hydroxide (d33) through to the acetate (d40), 8 Ni compounds from the hydroxide (d41) through to the acetate (d48), and 8 Cu compounds from the hydroxide (d49) through to the acetate (d56). These compounds can be used either singularly, or in combinations of a plurality of compounds.

Of these compounds, Mg and Ca are the most preferred metals, meaning the use of metal compounds (D) selected from a group consisting of Mg hydroxide (d1), Mg oxide (d2), Mg halides (d3), Mg carbonate (d4), Mg sulfate (d5), Mg nitrate (d6), Mg sulfite (d7), Mg acetate (d8), Ca hydroxide (d9), Ca oxide (d10), Ca halides (d11), Ca carbonate (d12), Ca sulfate (d13), Ca nitrate (d14), Ca sulfite (d15), and Ca acetate (d16) is preferred.

Furthermore, hydroxides and oxides of the 7 metals are also preferred, meaning the use of metal compounds (D) selected from a group consisting of Mg hydroxide (d1), Mg oxide (d2), Ca hydroxide (d9), Ca oxide (d10), Al hy-

**EP 1 548 074 A1**

droxide (d17), Al oxide (d18), Fe hydroxide (d25), Fe oxide (d26), Co hydroxide (d33), Co oxide (d34), Ni hydroxide (d41), Ni oxide (d42), Cu hydroxide (d49), and Cu oxide (d50) is also preferred.

Mg hydroxide (d1), Mg oxide (d2), Ca hydroxide (d9), and Ca oxide (d10) are particularly preferred, and Mg hydroxide (d1) and Ca hydroxide (d9) are the most desirable.

The quantity of this bivalent or higher metal compound (D) (or the combined weight of the various compounds in the case of a plurality of metal compounds), expressed as an equivalent value relative to the carboxyl groups within the EMA (B), must fall within a range from 0.05 to 30%, and is preferably from 0.05 to 12.5%, even more preferably from 0.1 to 10%, even more preferably from 0.15 to 7.5%, and most preferably from 0.5 to 7.5%.

[Other]

In addition to the aforementioned components (A), (B), and (D), the coating material (C) may also contain inorganic layered compounds. By incorporating inorganic layered compounds, the gas barrier properties of the gas barrier layer and the gas barrier laminate can be further improved.

From the viewpoint of the gas barrier property, incorporating large quantities of inorganic layered compounds is preferred. However, inorganic layered compounds display strong affinity for water, and are prone to moisture absorption. Furthermore, coatings that contain an inorganic layered compound tend to be prone to large increases in viscosity, resulting in a corresponding loss in coatability. In addition, if the inorganic layered compound content is too high, then the transparency of the formed gas barrier layer or gas barrier laminate deteriorates.

Considering these issues, the quantity of inorganic layered compounds is preferably within a range from 1 to 300 parts by weight, and even more preferably from 2 to 200 parts by weight, and most preferably no more than 100 parts by weight, per 100 parts by weight of the combined weight of the PVA (A) and the EMA (B).

In this description, the term "inorganic layered compound" refers to an inorganic compound in which unit crystal layers are superimposed to form a layered structure, and compounds which swell and undergo cleavage within solvents are preferred.

Examples of preferred inorganic layered compounds include montmorillonite, beidellite, saponite, hectorite, sauconite, vermiculite, fluoromica, muscovite, paragonite, phlogopite, biotite, lepidolite, margarite, clintonite, anandite, chlorite, donbassite, sudoite, cookeite, clinochlore, chamosite, nimite, tetrasilylic mica, talc, pyrophyllite, nacrite, kaolinite, halloysite, chrysotile, sodium taeniolite, xanthophyllite, antigorite, dickite, and hydrotalcite, and of these, swelling fluoromica and montmorillonite are particularly preferred.

The inorganic layered compounds may be naturally formed materials, artificially synthesized or modified materials, or compounds that have been treated with organic materials such as onium salts.

A swelling fluoromica-based mineral can be represented by the formula (1) shown below, and is the most preferred compound due to its degree of whiteness.

$$?(MF)\cdot?(aMgF_2\cdot bMgO)\cdot?SiO_2 \tag{1}$$

(In the formula (1), M represents sodium or lithium, and ?, ?, ?, a, and b each represent a coefficient, wherein 0.1 = ? = 2, 2 = ? = 3.5, 3 = ? = 4, 0 = a = 1, 0 = b = 1, and a+b = 1.)

One method of producing this type of swelling fluoromica-based mineral is a so-called melt method, wherein silicon oxide, magnesium oxide, and various fluorides are mixed together, the resulting mixture is heated at 1400 to 1500°C in an electric or gas oven until the components have completely melted, and crystals of the fluoromica-based mineral are then grown within the reaction vessel during the cooling process.

A swelling fluoromica-based mineral can also be produced using talc as a starting material, by intercalating alkali metal ions within the talc (Japanese Laid-Open Publication No. Hei 2-149415, the content of which is incorporated herein by reference). In this method, the talc is mixed with an alkali silicofluoride or an alkali fluoride, and the mixture is then subjected to a short heat treatment in a porcelain crucible at a temperature of approximately 700 to 1200°C, thereby yielding the swelling fluoromica-based mineral. In this method, the quantity of the alkali silicofluoride or alkali fluoride mixed with the talc preferably accounts for 10 to 35% by weight of the resulting mixture. If the quantity falls outside this range, then the yield of the swelling fluoromica-based mineral declines undesirably. The alkali metal of the alkali silicofluoride or alkali fluoride is preferably either sodium or lithium. The alkali metals may be used either singularly, or in combination. If potassium is used as the alkali metal, then a swelling fluoromica-based mineral is not produced, although potassium can be used in limited quantities in combination with either sodium or lithium, to aid regulation of the swelling characteristics.

In addition, a small quantity of alumina may also be added during production to regulate the swelling characteristics of the produced swelling fluoromica-based mineral.

5

Montmorillonite is represented by a formula (2) shown below, and can be produced by purifying naturally occurring material.

$$M_aSi_4(Al_{2-a}Mg_a)O_{10}(OH)_2 \cdot nH_2O \qquad (2)$$

(In the formula (2), M represents a sodium cation, and a represents a number from 0.25 to 0.60. Furthermore, the number of water molecules bonded to the interlayer ion exchange cations varies depending on the nature of the cation and conditions such as the humidity, and this variability is expressed by the $nH_2O$ in the formula.)

Montmorillonite also includes the homotypical ion substituted materials magnesian montmorillonite, iron montmorillonite, and iron magnesian montmorillonite, represented by the following formulas (3) through (5) respectively, and these materials can also be used.

$$M_aSi_4(Al_{1.67-a}Mg_{0.5+a})O_{10}(OH)_2 \cdot nH_2O \qquad (3)$$

$$M_aSi_4(Fe_{2-a}{}^{3+}Mg_a)O_{10}(OH)_2 \cdot nH_2O \qquad (4)$$

$$M_aSi_4(Fe_{1.67-a}{}^{3+}Mg_{0.5+a})O_{10}(OH)_2 \cdot nH_2O \qquad (5)$$

(In the formulas (3) to (5), M represents a sodium cation, and a represents a number from 0.25 to 0.60.)

Normally, montmorillonite contains ion exchange cations such as sodium or calcium between the layers of the material, but the quantity of these cations varies depending on the location from which the material is sourced. In a gas barrier coating material of the present invention, a montmorillonite in which an ion exchange process or the like has been used to substitute these interlayer ion exchange cations with sodium ions is preferred. Furthermore, montmorillonite that has been purified by water treatment is also preferred.

Although the inorganic layered compound may be mixed directly with the PVA (A) and the EMA (B), it is preferably swollen and dispersed in a liquid medium prior to mixing. Although there are no particular restrictions on this liquid medium used for swelling and dispersing, in the case of a natural swelling clay-based mineral, water, alcohols such as methanol, ethanol, propanol, isopropanol, ethylene glycol, and diethylene glycol, as well as dimethylformamide, dimethylsulfoxide, and acetone are preferred, and water or alcohols such as methanol are particularly preferred.

Other additives such as heat stabilizers, antioxidants, reinforcing agents, pigments, age resistors, weatherproofing agents, flame retardants, plasticizers, mold release agents, and lubricants may also be added to the coating material (C), provided such addition does not significantly impair the characteristics of the coating.

Examples of suitable heat stabilizers, antioxidants, and age resistors include hindered phenols, phosphorus compounds, hindered amines, sulfur compounds, copper compounds, alkali metal halides, and mixtures thereof.

Next is a description of a method of producing the coating material (C).

In a preferred method, the PVA (A) and the EMA (B) are prepared as separate aqueous solutions, and these solutions are then mixed together prior to use. Specific examples of preferred methods include the following:

(1) a method in which the metal compound (D), or an aqueous solution of the metal compound (D), is added during the mixing of the aqueous solution of the PVA (A) and the aqueous solution of the EMA (B);
(2) a method in which the metal compound (D) is first dissolved in the aqueous solution of the EMA (B), and the resulting solution is then mixed with the aqueous solution of the PVA (A); and
(3) a method in which the metal compound (D) is first dissolved in the aqueous solution of the PVA (A), and the resulting solution is then mixed with the aqueous solution of the EMA (B).

Of these, the method (2) is particularly preferred.

Although the concentration (of the solid fraction) of the coating material (C) can be suitably adjusted in accordance with the specifications of the application device, and/or the drying and heating device, if the solution is overly dilute, then forming a thick enough coating to ensure a satisfactory gas barrier property becomes difficult, and the subsequent drying process tends to require an inordinately long period of time. In contrast, if the concentration of the coating material (C) is too high, then achieving a homogenous coating material becomes difficult, and coatability problems tend to develop. Considering these factors, the concentration (the solid fraction) of the coating material (C) is preferably within a range from 5 to 50% by weight.

As described above, a gas barrier coating material comprising PVA (A) and EMA (B) in a predetermined ratio, and also comprising a predetermined quantity of a specific metal compound (D), is chlorine-free, and despite using a water-soluble polymer, is able to provide superior gas barrier properties to conventional coatings in high humidity conditions, even though production is performed under the mild conditions described below.

As follows is a description of a gas barrier laminate according to the present invention, formed using a gas barrier coating material (C) described above, with reference to the figures showing preferred embodiments of the laminate.

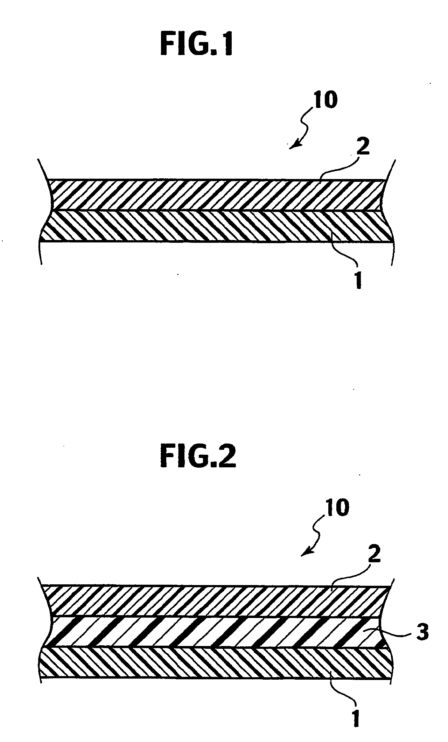

As shown in Fig. 1 and Fig. 2, a gas barrier laminate 10 comprises a plastic substrate 1, and a gas barrier layer 2 formed from an aforementioned gas barrier coating material. The gas barrier layer 2 may be either formed directly on top of the plastic substrate 1, as shown in Fig. 1, or laminated to the plastic substrate 1 with an undercoat layer 3 (hereafter also referred to as the UC layer) disposed therebetween, as shown in Fig.2. The gas barrier layer 2 can be formed by applying a gas barrier coating material (C) to either the plastic substrate 1 or the UC layer 3, and then conducting a heat treatment.

[Plastic Substrate (1)]

The plastic substrate 1 is either a film-like substrate, produced from a heat moldable thermoplastic resin using a technique such as extrusion molding, blow molding, stretch blow molding, or draw molding, or alternatively, is a substrate that has been molded into the shape of a container such as a bottle, a cup, or a tray. Of these, films are preferred, and films with excellent transparency are particularly desirable. If a gas barrier laminate produced using a highly transparent plastic substrate is used as a packaging material, then the contents can be viewed from outside the wrapped package.

Furthermore, the plastic substrate may either comprise a single layer, or comprise a plurality of layers produced by simultaneous melt extrusion or some other lamination process.

An unstretched film may be used as the plastic substrate, and a UC composition described below or a gas barrier coating material is applied to the substrate and dried, and then stretching treatment can be conducted. For example, following drying, the laminate can be supplied to a tenter stretching frame, and stretched simultaneously in the longitudinal direction and the transverse direction (simultaneous biaxial stretching), before being heat treated. Alternatively, the film can first be stretched in the longitudinal direction using a multistage heated roller device, and the gas barrier coating material then applied and dried, before stretching is conducted in the transverse direction using a tenter stretching frame (sequential biaxial stretching). Furthermore, it is also possible to combine the longitudinal stretching with the tenter-based simultaneous biaxial stretching.

Suitable examples of the thermoplastic resin used for forming the plastic substrate include olefin-based copolymers, polyesters, polyamides, styrene-based copolymers, vinyl chloride-based copolymers, acrylic copolymers, and polycarbonates, and of these, olefin-based copolymers, polyesters, and polyamides are preferred.

Examples of suitable olefin-based copolymers include low-, medium-, and high-density polyethylene, linear low-density polyethylene, polypropylene, ethylene-propylene copolymers, ethylene-butene copolymers, ionomers, ethylene-vinyl acetate copolymers, and ethylene-vinyl alcohol copolymers.

Examples of suitable polyesters include polyethylene terephthalate, polybutylene terephthalate, polyethylene terephthalate/isophthalate, and polyethylene naphthalate, and examples of suitable polyamides include nylon 6, nylon 6,6, nylon 6,10, and meta-xylylene adipamide.

Examples of suitable styrene-based copolymers include polystyrene, styrenebutadiene block copolymers, styrene-acrylonitrile copolymers, styrene-butadiene-acrylonitrile copolymers (ABS resins); examples of suitable vinyl chloride-based copolymers include polyvinyl chloride and vinyl chloride-vinyl acetate copolymers; and examples of suitable acrylic copolymers include polymethylmethacrylate, and methyl methacrylate-ethyl acrylate copolymers.

The above thermoplastic resins may be used either singularly, or in mixtures of two or more different resins.

If required, the heat moldable thermoplastic resin used for forming the plastic substrate may also contain one or more additives such as pigments, antioxidants, antistatic agents, ultraviolet absorbers, or lubricants, wherein the total quantity of such additives falls within a range from 0.001 to 5.0 parts by weight per 100 parts by weight of the thermoplastic resin.

Furthermore, in those cases where a gas barrier laminate is used for forming a packaging material, any of the various reinforced plastics can be used as the plastic substrate in order to ensure improved strength for the packaging material. Specifically, one or more reinforcing fibers such as glass fiber, aromatic polyamide fiber, carbon fiber, pulp, or cotton linter; powdered reinforcing materials such as carbon black or white carbon; or flake-like reinforcing materials such as glass flakes or aluminum flakes can be blended into the thermoplastic resin in a total quantity within a range from 2 to 150 parts by weight per 100 parts by weight of the thermoplastic resin. Furthermore, one or more extenders such as heavy or light calcium carbonate, mica, talc, kaolin, gypsum, clay, barium sulfate, alumina powder, silica powder, or magnesium carbonate may also be blended into the resin using conventional methods, in a total quantity within a range from 5 to 100 parts by weight per 100 parts by weight of the thermoplastic resin.

In addition, in order to improve the gas barrier property, scaly fine inorganic powders such as water swelling mica or clay may also be blended into the resin using conventional methods, in a total quantity within a range from 5 to 100 parts by weight per 100 parts by weight of the thermoplastic resin.

[Undercoat Layer (UC Layer) (3)]

The UC layer 3 is positioned between the gas barrier layer 2 and the plastic substrate 1, as shown in Fig. 2, and has a primary function of improving the adhesion of the gas barrier layer.

The UC layer can be formed from a variety of polymers including urethane, polyester, acrylic, and epoxy polymers, and urethane-based UC layers are preferred.

In the case of a urethane-based UC layer, the gas barrier laminate comprising the plastic substrate, the UC layer, and the gas barrier layer can be produced using any of the methods described below.

(1) A UC composition (a composition for forming the UC layer) comprising a polyol component such as a polyester polyol or a polyether polyol and a polyisocyanate component is applied to the plastic substrate and then heated, thereby causing a reaction between the polyol component and the polyisocyanate component to form the urethane-based UC layer. A solution of the above coating material (C) is then applied to the thus formed UC layer and heated, thereby forming the gas barrier layer on top of the UC layer.

(2) The same UC composition as that used in the above method (1) is applied to the plastic substrate and dried, forming a UC layer precursor in which the reaction between the polyol component and the polyisocyanate component has not proceeded to completion, and a solution of the above coating material (C) is then applied to the surface of this precursor and heated, thereby forming the UC layer and the gas barrier layer in a single step.

(3) The same UC composition as that used in the above method (1) is applied to the plastic substrate, and before any heating is conducted, the above coating material (C) is then applied. Heating is then used to form the UC layer and the gas barrier layer in a single step.

The polyisocyanate contained within the UC composition can also react with the hydroxyl groups of the PVA (A) at the interface with the gas barrier layer, which not only contributes to improved adhesion, but is also thought to assist in the cross-linking of the gas barrier layer, thereby improving the water resistance. Accordingly, the methods (2) and (3) are preferred.

The polyol component used in the formation of the UC layer is preferably a polyester polyol, and examples of suitable polyester polyols include those formed by reaction of a polyvalent carboxylic acid or a dialkyl ester thereof, or a mixture of the two, with a glycol or a mixture of glycols.

Examples of suitable polyvalent carboxylic acids include aromatic polyvalent carboxylic acids such as isophthalic acid, terephthalic acid, and naphthalenedicarboxylic acid, and aliphatic polyvalent carboxylic acids such as adipic acid, azelaic acid, sebacic acid, and cyclohexanedicarboxylic acid.

Examples of suitable glycols include ethylene glycol, propylene glycol, diethylene glycol, butylene glycol, neopentyl glycol, and 1,6-hexanediol.

These polyester polyols preferably have a glass transition temperature (hereafter referred to as Tg) within a range from -50°C to 120°C, and even more preferably from - 20°C to 100°C, and most preferably from 0°C to 90°C. The ideal Tg value for the polyester polyol varies depending on the heat curing conditions used during the heat curing process conducted following application of the gas barrier coating material (C). If the coating material (C) is heat cured at a comparatively low temperature, then a polyester polyol with a comparatively high Tg value is preferred, whereas if heat curing is conducted at a comparatively high temperature, then polyester polyols with Tg values across a comparatively broad range from low temperatures to high temperatures can be employed favorably. For example, if the coating material (C) is heat cured at 180°C, then polyester polyols with Tg values within a range from approximately 70 to 90°C are preferred. In contrast, if the coating material (C) is heat cured at 200°C, then polyester polyols with Tg values within a range from approximately 0 to 90°C can be used.

The number average molecular weight of the polyester polyol is preferably within a range from 1,000 to 100,000, and even more preferably from 3,000 to 50,000, and most preferably from 10,000 to 40,000.

Examples of the polyisocyanate used in the formation of the UC layer include aromatic polyisocyanates such as 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, xylylene diisocyanate, and tetramethylxylylene diisocyanate; aliphatic polyisocyanates such as tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate; polyfunctional polyisocyanate compounds such as isocyanurates, biurets, and allophanates derived from the above polyisocyanate monomers; and polyfunctional polyisocyanate compounds containing terminal isocyanate groups, obtained through reaction with a trifunctional or higher polyol compound such as trimethylolpropane or glycerol. Of these compounds, a trimer of hexamethylene diisocyanate, which represents a trifunctional isocyanurate, is preferred.

The weight ratio between the polyester polyol and the polyisocyanate is preferably within a range from 10:90 to 99:1, and even more preferably from 30:70 to 90:10, and most preferably from 50:50 to 85:15.

Although the thickness of the UC layer can be determined in accordance with the intended application, it is typically within a range from 0.1 to 10 µm, and even more preferably from 0.1 to 5 µm, and most preferably from 0.1 to 1 µm. If the thickness is less than 0.1 µm, then achieving the desired level of adhesion can be problematic, whereas if the thickness exceeds 10 µm, problems become increasingly likely during the production steps such as the coating step.

The concentration of the polyester polyol and the polyisocyanate within the UC composition can be adjusted by addition of an appropriate solvent. The concentration of the combination of the two components is preferably within a range from 0.5 to 80% by weight, and even more preferably from 1 to 70% by weight. If the solution concentration is too low, then forming a coating of the required thickness becomes difficult, and an undesirably large quantity of heat is required during the drying process. In contrast, if the solution concentration is too high, then the viscosity of the solution becomes overly high, increasing the danger of a deterioration in the ease with which operations such as mixing and coating can be conducted.

Examples of solvents that can be used in the UC composition include toluene, MEK (methyl ethyl ketone), cyclohexanone, solvent naphtha, isophorone, xylene, MIBK (methyl isobutyl ketone), ethyl acetate, and butyl acetate, although this is in no way an exhaustive list.

In addition to the components described above, the UC layer may also contain conventional additives such as curing-accelerating catalysts, fillers, softeners, age resistors, stabilizers, adhesion promoters, leveling agents, antifoaming agents, plasticizers, inorganic fillers, pressure-sensitive adhesion imparting resins, fibers, colorants such as pigments, and life extenders.

Formation of the UC layer and the gas barrier layer described below can be conducted by applying a predetermined thickness of the composition for forming each layer (the UC composition and the coating material (C) respectively) to either the plastic substrate or the UC layer, using a technique such as roll coating, gravure coating, gravure offset coating, spray coating, or a combination of these techniques, although the invention is not restricted to these techniques.

[Gas Barrier Layer (2)]

The gas barrier layer 2 is produced by applying the gas barrier coating material (C) described above to the plastic substrate 1, either directly or with the UC layer disposed therebetween, and then conducting a heat treatment. In other words, by applying the coating material (C) and then conducting a heat treatment, the esterification reaction between the PVA (A) and the EMA (B), and the reaction between the metal compound (D) and the PVA (A), or the metal compound (D) and the EMA (B), are initiated, thus generating a gas barrier layer with excellent water resistance. In order to ensure a sufficiently high level of gas barrier performance for the gas barrier laminate, the thickness of the gas barrier layer preferably exceeds 0.1µm.

Although ideal heat treatment conditions for the coating material (C) is affected by factors such as the ratio between the PVA (A) and the EMA (B), and the quantity of the metal compound (D) within the coating material (C), making it impossible to generalize, the heat treatment is preferably conducted within a temperature range from 100 to 300°C, even more preferably from 120 to 250°C, even more preferably from 140 to 240°C, and most preferably from 160 to 220°C.

Specifically, preferred heat treatment times are at least 90 seconds for the temperature range from 100 up to but not including 140°C, at least 1 minute for the temperature range from 140 up to but not including 180°C, and at least 30 seconds for the temperature range from 180 up to but not including 250°C; even more preferred heat treatment times are at least 2 minutes for the temperature range from 100 up to but not including 140°C, at least 90 seconds for the temperature range from 140 up to but not including 180°C, and at least 1 minute for the temperature range from 180 up to but not including 240°C; and the most desirable heat treatment times are at least 4 minutes for the temperature range from 100 up to but not including 140°C, at least 3 minutes for the temperature range from 140 up to but not including 180°C, and approximately 2 minutes for the temperature range from 180 up to but not including 220°C.

If the temperature during the heat treatment is too low, or the treatment time is too short, then the cross-linking reactions between the components of the coating material (C) do not progress satisfactorily, and the water resistance of the gas barrier layer or the gas barrier laminate is inadequate. In contrast, if the heat treatment is conducted at a temperature exceeding 300°C, then deformation, wrinkling, or thermal decomposition can occur within the formed gas barrier layer or the plastic substrate, increasing the likelihood of a deterioration in the gas barrier properties.

Longer heat treatment times tend to result in improved gas barrier properties under conditions of high humidity, although if other factors such as productivity, and thermal deformation or deterioration of the substrate film are also considered, then the heat treatment time is preferably no more than 1 hour, and is even more preferably 30 minutes or less, and most preferably 20 minutes or less.

For example, in the case of a coating material (C) in which PVA (A) / EMA (B) = 30/70 (weight ratio), and the $Mg(OH)_2$ content relative to the COOH groups within the EMA (B) is from 1 to 5%, heat treatment is preferably conducted at a temperature of 160 to 200°C, for a period of approximately 15 seconds to 10 minutes.

As described above, a gas barrier laminate produced by applying a coating material (C) to a substrate, and then heat treating the coating, that is, drying and heat curing the coating, under milder conditions than are conventionally used, thus forming a gas barrier layer, contains no chlorine within the gas barrier layer, and displays excellent gas barrier properties under conditions of high humidity.

If this gas barrier laminate is subjected to further heat treatment in the presence of water containing a bivalent or higher metal compound (hereafter also simply referred to as "water"), with the gas barrier layer in contact with the water, then the gas barrier property can be further improved with no thermal deterioration of the plastic substrate or the gas barrier layer, although the details of the mechanism by which this change occurs remain unclear. In other words, by heat treating the heat cured coating material (C) in the presence of this water, the gas barrier property of the coating material (C) can be further improved. The water containing a bivalent or higher metal compound need not use ion exchange water, purified water, or distilled water, and can use any readily available tap water.

Examples of suitable methods of heat treating the gas barrier laminate in the presence of this type of water include the methods described below. Combinations of a plurality of these methods can also be used.

(1) Immersing the gas barrier laminate in water (or hot water).
(2) Spraying the gas barrier laminate with a mist or shower of water (or hot water).
(3) Placing the gas barrier laminate in a high humidity environment.
(4) Exposing the gas barrier laminate to water vapor. The laminate could also be sprayed with water vapor, and then heated using a heated roller.

The temperature of the water used in this treatment, or the temperature of the treatment environment, is preferably at least 90°C, even more preferably 95°C or greater, even more preferably within a range from 100 to 140°C, and most preferably from 110 to 130°C. Furthermore, the treatment time is preferably at least 1 minute, even more preferably 10 minutes or longer, and most preferably 20 minutes or longer. Higher water temperatures or treatment environment temperatures, and longer treatment times are preferred, although if other factors such as productivity, economic viability, and energy conservation are also considered, then in practice, temperature is at most approximately 140°C, and the treatment time is at longest approximately 1 hour.

Although the results of this treatment vary depending on the treatment conditions, making it difficult to generalize, this heat treatment in the presence of water enables the oxygen permeability of the gas barrier layer or the gas barrier laminate under high humidity to be reduced to a value that is 1/1.5 to 1/70 that of the permeability prior to treatment, which represents a substantial improvement in the oxygen gas barrier property.

For example, an oxygen permeability (measured under conditions including a temperature of 25°C and 80% relative humidity) of no more than 13 cc·µm/m$^2$·24h·atm, and at best 3.1 cc·µm/m$^2$·24h·atm, prior to treatment can be reduced to no more than 1.5 cc·µm/m$^2$·24h·atm, and even as low as 0.05 cc·µm/m$^2$·24h·atm, by the above heat treatment in the presence of water.

When packaging foodstuffs in containers (packaging materials), in those cases where, following packaging of the food within the container (packaging material), the package must be subjected to retort treatment (sterilization) with water vapor under pressurized conditions, this retort treatment can be used to improve the performance of the gas barrier layer of the packaging material. In other words, by forming a gas barrier laminate, using this laminate to form a food packaging material, placing food inside the packaging, and then subjecting the package to a 30 minute retort treatment (sterilization treatment) at 120°C, using water vapor under pressurized conditions, the gas barrier property of the gas barrier laminate used in forming the food packaging container can be improved.

In those cases where a gas barrier laminate is used as the type of food packaging material described above, the plastic substrate side of the laminate is preferably placed on the food side of the package (the inside), with the gas barrier layer side of the laminate facing outward. Furthermore, the appended drawings illustrate only examples in which the gas barrier layer forms the outermost layer of the gas barrier laminate, but a layer of another optional polymer could also be formed on top of the gas barrier layer. In addition, although not shown in the appended drawings, a layer of an optional polymer may also be formed on the opposite side of the plastic substrate from the gas barrier layer. Furthermore, a different layer from a UC layer may also be formed between the gas barrier layer and the plastic substrate.

If, due to the formation of another polymer layer, the gas barrier layer does not represent the outermost layer of the gas barrier laminate, then the aforementioned heat treatment conducted in the presence of water is unable to produce the type of improvement in gas barrier performance observed when the gas barrier layer is the outermost layer, and in contrast, the gas barrier property actually tends to deteriorate. However, by using a gas barrier layer comprising a specific bivalent or higher metal compound (D), such as a gas barrier laminate of the present invention, the degree of this deterioration in the gas barrier property is smaller than that observed for gas barrier layers that use other metal compounds such as sodium compounds or the like, meaning the present invention also provides some suppression of deterioration in the gas barrier property.

As follows is a description of specifics of the present invention, based on a series of examples and comparative examples, although the present invention is in no way limited to these examples.

The oxygen permeability ($P_{film}$) of the gas barrier layers and the oxygen permeability ($P_{total}$) of the gas barrier laminates were determined in the following manner. Namely, each produced laminated film (gas barrier laminate) was placed in an atmosphere at 25°C and 80% RH, and a measurement was conducted using an OX-TRAN TWIN oxygen permeability tester, manufactured by Modem Control Inc., thus yielding a result for the oxygen permeability ($P_{total}$) at 25°C and 80% RH. Specifically, a mixture of oxygen gas and nitrogen gas (the carrier gas) that had been humidified to 25°C and 80% RH was used. The oxygen permeability ($P_{PET}$) of the substrate film was also measured in the same manner. The oxygen permeability ($P_{film}$) of the film formed from the gas barrier coating material (C) (the gas barrier layer) was calculated from the following formula.

$$1/P_{total} = 1/P_{film} + 1/P_{PET}$$

In this formula,

   $P_{total}$ (the measured value) represents the oxygen permeability of the laminated film (the gas barrier laminate) comprising the film formed from the coating material (C) (the gas barrier layer), and a polyethylene terephthalate film (the substrate film that functions as the plastic substrate), although in those cases where the laminate also contains a UC layer, $P_{total}$ represents the oxygen permeability of the laminated film (the gas barrier laminate) comprising the film (the gas barrier layer), the UC layer, and the substrate film;

   $P_{film}$ (the calculated value) represents the oxygen permeability of the film formed from the coating material (C) (the gas barrier layer); and

   $P_{PET}$ (the measured value) represents the oxygen permeability of the substrate film (the polyethylene terephthalate film), although in those cases where the laminate also contains a UC layer, $P_{PET}$ represents the combined oxygen permeability of the UC layer and the substrate film.

[Example 1]

PVA (Poval 124, manufactured by Kuraray Co., Ltd., polyvinyl saponification degree: 98 to 99%, average polymerization degree: approximately 2,400) was dissolved in hot water, and then cooled to room temperature, thus forming a PVA aqueous solution. In a separate preparation, an aqueous solution of EMA (weight average molecular weight: 100,000), containing sufficient dissolved $Mg(OH)_2$ to produce an equivalence relative to the COOH groups of 4.4%, was also prepared.

The PVA aqueous solution and the EMA aqueous solution were mixed together in the weight ratio shown in Table 1, thereby yielding a mixed coating solution (gas barrier coating material) with a solid fraction of 10% by weight.

The above mixed coating solution was applied to a biaxially stretched polyester film (polyethylene terephthalate film of thickness 12 μm) using a No. 6 bar coater, and was then dried for 2 minutes at 80°C in an electric oven, and then subjected to further drying and heat treatment for 2 minutes at 200°C in an electric oven, thus forming a film (a gas barrier layer) of thickness 2 μm, and completing preparation of a laminated film of the example 1.

[Example 2]

Using a solution of polyester (Vylon 200, manufactured by Toyobo Co., Ltd., Tg: 67°C, Mn = 17,000) dissolved in a toluene/MEK mixed solvent, and a polyisocyanate (Sumijule 3300, manufactured by Sumitomo Chemical Co., Ltd), a mixed solution was prepared in which the weight ratio between the polyester and the polyisocyanate had been adjusted to 60/40. To this mixed solution were added a 1% MEK solution of dibutyltin laurylate, MEK, and ethyl acetate, thus yielding a primer composition (a UC composition) with a solid fraction concentration of approximately 14%.

An aqueous solution of EMA (weight average molecular weight: 100,000), containing sufficient dissolved Mg $(OH)_2$ to produce an equivalence relative to the COOH groups of 0.5%, was also prepared, and this EMA aqueous solution and the same PVA aqueous solution as that used in the example 1 were then mixed together to achieve the PVA/EMA weight ratio shown in Table 1, thereby yielding a mixed coating solution (gas barrier coating material) with a solid fraction of 10% by weight.

The above primer composition was applied to a similar biaxially stretched film to that used in the example 1, using a No. 4 bar coater, and was then dried for 30 seconds at 80°C in an electric oven, thus forming a laminated film with a coating (UC layer) of thickness 0.5 μm. The above mixed coating solution was then applied to the surface of this laminated film using a No. 6 bar coater, and was dried for 2 minutes at 80°C in an electric oven, and then subjected to further drying and heat treatment for 2 minutes at 200°C in an electric oven, thus forming a film (a gas barrier layer) of thickness 2 μm, and completing preparation of a laminated film of the example 2.

[Examples 3 to 6]

With the exception of using EMA aqueous solutions containing sufficient dissolved $Mg(OH)_2$ (examples 3 to 5) or $Ca(OH)_2$ (example 6) to produce the equivalent values relative COOH shown in Table 1, laminated films of the examples 3 to 6 were prepared in the same manner as the example 2.

[Comparative Example 1]

With the exception of using an EMA aqueous solution containing no dissolved metal compound, a laminated film of the comparative example 1 was prepared in the same manner as the example 2.

[Comparative Example 2]

In order to investigate the effect of zirconium compounds, an attempt was made to dissolve sufficient zirconium ammonium carbonate (Zircosol AC-20, manufactured by Daiichi Kigenso Kagaku Kogyo Co., Ltd.) in an EMA aqueous solution to produce a Zr equivalence relative to the COOH groups of 4.4%, but a white colored precipitate developed, making application impossible.

[Comparative Examples 3 to 8]

With the exceptions of replacing EMA with an aqueous solution of a methyl vinyl ether-maleic anhydride copolymer (MVE) (Gantrez AN-119, manufactured by ISP Corporation, methyl vinyl ether / maleic anhydride = 50/50 (molar ratio), weight average molecular weight: 190,000) in the comparative examples 3 and 6, with an aqueous solution of an isobutylene-maleic anhydride copolymer (ISB) (Isoban 04, manufactured by Kuraray Co., Ltd.) in the comparative examples 4 and 7, or with an aqueous solution of polyacrylic acid (PAA) (a 25% aqueous solution of polyacrylic acid, manufactured by Wako Pure Chemical Industries Ltd., number average molecular weight: 150,000) in the comparative examples 5 and 8, and then dissolving the types and quantities of metal compounds shown in Table 1 in these aqueous solutions, laminated films of the comparative examples 3 to 8 were prepared in the same manner as the example 2. The ISB aqueous solution was prepared by mixing and dissolving the metal compound shown in Table 1, sufficient ammonium hydroxide to produce an equivalence relative to the COOH groups of 60%, and the ISB in hot water.

[Examples 7 to 9] [Comparative Example 9]

With the exception of altering the weight ratio between the PVA and EMA as shown in Table 1, laminated films of the examples 7 to 9 and the comparative example 9 were prepared in the same manner as the example 4.

The oxygen permeability values ($P_{total}$) for each of the laminated films prepared in the examples and comparative examples, and the oxygen permeability ($P_{film}$) of each of the corresponding gas barrier layers, are shown in Table 1.

[Table 1]

| | | UC layer | Gas barrier coating material | | | | $P_{total}$ | $P_{film}$ |
|---|---|---|---|---|---|---|---|---|
| | | | polymer | | metal compound | | cc/m$^2$·24h·atm | |
| | | | type | weight ratio | type | equivalence relative to COOH (%) | | |
| Examples | 1 | no | PVA/EMA | 30/70 | Mg(OH)$_2$ | 4.4 | 3.2 | 3.3 |
| | 2 | yes | | | | 0.5 | 5.5 | 5.8 |
| | 3 | | | | | 1.1 | 4.3 | 4.5 |
| | 4 | | | | | 4.4 | 3.1 | 3.2 |
| | 5 | | | | | 8.8 | 8.0 | 8.7 |
| | 6 | | | | Ca(OH)$_2$ | 2.5 | 5.0 | 5.3 |
| | 7 | | | 20/80 | Mg(OH)$_2$ | 4.4 | 9.0 | 9.9 |
| | 8 | | | 25/75 | | | 6.5 | 7.0 |
| | 9 | | | 40/60 | | | 8.7 | 9.5 |
| Comparative examples | 1 | yes | PVA/EMA | 30/70 | none | - | 13.0 | 14.9 |
| | 2 | | PVA/EMA | | Zr compound | 4.4 | application impossible | |
| | 3 | | PVA/MVE | | Mg(OH)$_2$ | 4.4 | 20.6 | 25.4 |
| | 4 | | PVA/ISB | | | | 33.0 | 49.3 |
| | 5 | | PVA/PAA | | | | 26.0 | 35.1 |
| | 6 | | PVA/MVE | | Ca(OH)$_2$ | 2.5 | 30.7 | 44.3 |
| | 7 | | PVA/ISB | | | | 50.0 | 100.0 |
| | 8 | | PVA/PAA | | | | 27.1 | 37.2 |
| | 9 | | PVA/EMA | 70/30 | Mg(OH)$_2$ | 4.4 | 18.0 | 22.0 |

As is evident from comparisons with the comparative examples 1 and 2, by incorporating a specific bivalent or higher metal compound (D) such as Mg(OH)$_2$ or Ca(OH)$_2$ within a coating material containing PVA and EMA, a gas barrier layer with excellent gas barrier properties can be formed.

Furthermore, as is evident from comparisons with the comparative examples 3 to 8, compared with coating materials containing PVA and MVE, PVA and ISB, or PVA and PAA, coating materials containing PVA and EMA, in combination with the predetermined metal compound, are able to provide a marked improvement in the gas barrier property.

In addition, from the comparative example 9 it is evident that the ratio between the PVA and the EMA has a significant effect on the gas barrier property.

Next, each of the laminated films of the examples 1 through 9 was treated for 30 minutes in hot water (tap water) using an autoclave (120°C, 1.2 kgf/cm$^2$), and the oxygen permeability of the laminated film was then remeasured.

The oxygen permeability values ($P_{total}$ and $P_{film}$) following this hot water treatment are shown in Table 2.

[Table 2]

| | | Following hot water treatment (cc/m$^2$·24h·atm) | |
|---|---|---|---|
| | | $P_{total}$ | $P_{film}$ |
| Example | 1 | 0.3 | 0.3 |
| | 2 | 0.3 | 0.3 |
| | 3 | 0.2 | 0.2 |
| | 4 | 0.05 | 0.05 |
| | 5 | 1.0 | 1.0 |
| | 6 | 0.2 | 0.2 |
| | 7 | 1.0 | 1.0 |
| | 8 | 0.4 | 0.4 |
| | 9 | 0.6 | 0.6 |

The present application relates to the subject matter disclosed in Japanese Patent Application No. 2002-282284 filed on September 27, 2002, the content of which is incorporated herein by reference.

Although preferred embodiments of the invention have been described above, it should be understood that a variety of modifications and alterations can be made without departing from the novel and useful characteristic features of the present invention. Accordingly, it is intended that all such modifications and alterations are covered by the scope of the appended claims.

**Claims**

1. A gas barrier coating material comprising polyvinyl alcohol (A), an ethylene-maleic acid copolymer (B), and a metal compound (D), wherein a ratio (A)/(B) between the polyvinyl alcohol (A) and the ethylene-maleic acid copolymer (B) falls within a range from (A)/(B) = 50/50 to 10/90 (weight ratio), the metal compound (D) comprises at least one compound selected from a group consisting of hydroxides, oxides, halides, carbonates, sulfates, nitrates, sulfites, and acetates of bivalent or higher metals selected from a group consisting of Mg, Ca, Al, Fe, Co, Ni, and Cu, and a quantity of the metal compound (D), expressed as an equivalent value relative to carboxyl groups within the ethylene-maleic acid copolymer (B), is within a range from 0.05 to 30%.

2. The gas barrier coating material according to claim 1, wherein the metal compound (D) is at least one compound selected from a group consisting of hydroxides and oxides of bivalent or higher metals selected from a group consisting of Mg, Ca, Al, Fe, Co, Ni, and Cu.

3. The gas barrier coating material according to either one of claim 1 and claim 2, wherein the metal compound (D) is at least one compound selected from a group consisting of Mg hydroxide, Mg oxide, Ca hydroxide, and Ca oxide.

4. The gas barrier coating material according to any one of claim 1 through claim 3, wherein the metal compound (D) is capable of reacting with a hydroxyl group or a carboxyl group.

5. The gas barrier coating material according to any one of claim 1 through claim 4, wherein a quantity of the metal compound (D), expressed as an equivalent value relative to carboxyl groups within the ethylene-maleic acid copolymer (B), is within a range from 0.05 to 12.5%.

6. A gas barrier laminate, comprising a plastic substrate, and a gas barrier layer formed from the gas barrier coating material according to any one of claim 1 through claim 5, wherein the gas barrier layer is laminated on top of the plastic substrate, either directly, or with an undercoat layer disposed therebetween.

# FIG.1

# FIG.2

## INTERNATIONAL SEARCH REPORT

| | International application No. |
|---|---|
| | PCT/JP03/12339 |

A. CLASSIFICATION OF SUBJECT MATTER
    Int.Cl⁷  C09D135/00, C09D129/04, C09D123/02, B32B27/28

According to International Patent Classification (IPC) or to both national classification and IPC

B. FIELDS SEARCHED

Minimum documentation searched (classification system followed by classification symbols)
    Int.Cl⁷  C09D135/00, C09D129/04, C09D123/00-123/36,
             B32B27/28-27/32, C08J5/18, C08J7/04

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP 890432 A1   (KUREHA CHEMICAL INDUSTRY CO., LTD.), 13 January, 1999 (13.01.99), Claims; examples & JP 10-237180 A | 1-6 |
| A | JP 4-89854 A  (Toyo Ink Manufacturing Co., Ltd.), 24 March, 1992 (24.03.92), Claims (Family: none) | 1-6 |
| A | JP 2001-323204 A  (Unitika Ltd.), 22 November, 2001 (22.11.01), Claims (Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 November, 2003 (04.11.03) | 18 November, 2003 (18.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

16

**EP 1 548 074 A1**

<table>
<tr><td colspan="2" align="center">INTERNATIONAL SEARCH REPORT</td><td>International application No.<br>PCT/JP03/12339</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | EP 1211295 A1  (JSR CORP.),<br>05 June, 2002 (05.06.02),<br>Claims<br>& JP 2001-187857 A | 1-6 |
| E,A | JP 2003-292713 A  (Rengo Co., Ltd.),<br>15 October, 2003 (15.10.03),<br>Claims; Par. Nos. [0011], [0021]<br>(Family: none) | 1-6 |

Form PCT/ISA/210 (continuation of second sheet) (July 1998)

17